# EUROPÄISCHE PATENTSCHRIFT

(11) **EP 1 070 666 B1**
(45) Veröffentlichungstag und Bekanntmachung des Hinweises auf die Patenterteilung: **21.09.2005**
(21) Anmeldenummer: 00115304.8
(22) Anmeldetag: 14.07.2000
(51) Int. Cl.: B64G 7/00, B64G 1/44, F16C 29/02

(54) **Lageranordnung zum Abstützen von Zugkräften und Lagerkopf für die Lageranordnung**
Bearing arrangement for supporting tension forces and bearing head for said bearing arrangement
Arrangement de paliers pour le support de forces en tension et tête de palier pour dit arrangement de paliers

(30) Priorität: 20.07.1999 DE 19933379
(43) Veröffentlichungstag der Anmeldung: 24.01.2001
(73) Patentinhaber: AeroLas GmbH Aerostatische Lager-Lasertechnik, 82008 Unterhaching (DE)
(72) Erfinder: Muth, Michael, 81737 München (DE)
(74) Vertreter: Schlimme, Wolfram

(56) Entgegenhaltungen:
- EP-A- 0 046 111
- CH-A- 415 188
- US-A- 5 098 203
- US-A- 5 501 114
- PATENT ABSTRACTS OF JAPAN vol. 1998, no. 04, 31. März 1998 (1998-03-31) & JP 09 327190 A (MITSUBISHI ELECTRIC CORP;JISEDAI EISEI TSUSHIN HOSO SYST KENKYUSHO:KK), 16. Dezember 1997 (1997-12-16)
- PATENT ABSTRACTS OF JAPAN vol. 1999, no. 13, 30. November 1999 (1999-11-30) & JP 11 218471 A (MITSUBISHI ELECTRIC CORP), 10. August 1999 (1999-08-10)
- PATENT ABSTRACTS OF JAPAN vol. 014, no. 235 (M-0975), 18. Mai 1990 (1990-05-18) & JP 02 060900 A (TOSHIBA CORP), 1. März 1990 (1990-03-01)
- "ZERO-SPRING-RATE MECHANISM/AIR SUSPENSION CART" NTIS TECH NOTES,US,US DEPARTMENT OF COMMERCE. SPRINGFIELD, VA, 1. Dezember 1991 (1991-12-01), Seiten 928A-928B, XP000278886 ISSN: 0889-8464

## Beschreibung

Die Erfindung betrifft eine Lageranordnung zum Abstützen einer hängenden Last gemäß dem Oberbegriff des Patentanspruchs 1. Diese Lageranordnung dient zur hängenden Lagerung einer Masse, um in einem Gravitationsfeld deren Schwerelosigkeit zu simulieren.

Eine derartige Lageranordnung ist beispielsweise aus der DE 195 01 571 A1 bekannt.

Die CH 415 188 A offenbart eine magnetische Vorrichtung zum Festhalten und zum berührungslosen Verschieben zweier Teile. Ein feststehender Magnet ist von einem Gehäuse umgeben, in welchem an einer Unterseite oder Oberseite Austrittslöcher für Preßluft vorgesehen sind, wobei die Preßluft in ein mit den Austrittslöchern verbundenes Kanalsystem im Gehäuse eingeleitet wird. Eine Platte aus magnetischem Stoff wird vom Magneten angezogen, wobei gleichzeitig die aus den Austrittslöchern austretende Preßluft die Platte vom Gehäuse beabstandet hält. Auf diese Weise wird ein Gleichgewicht zwischen der magnetischen Anziehungskraft und der Abstoßungskraft aufgrund der aus den Austrittslöchern austretenden Preßluft hergestellt.

Die US 5,098,203 offenbart, ebenso wie die EP 0 046 111 A1, ein magnetisches Lagersystem, bei welchem zentral aus einem den Magneten aufweisenden Gehäuse Preßluft auf die Lagerfläche ausgeströmt wird. Bei der EP 0 046 111 A1 ist zusätzlich eine Ausnehmung der Lagerfläche im Bereich des Magneten vorgesehen, in welcher die austretende Preßluft ein großflächiges Luftpolster bilden kann. Beide bekannte Lageranordnungen reagieren empfindlich auf eine Verkippung des zu lagernden Gegenstandes gegenüber der Lageranordnung, weil bei einer Verkippung die Preßluft schlagartig austreten kann und dadurch die beiden zu lagernden Gegenstände miteinander in Berührung geraten. Eine hängende Lagerung ist aus diesen Schriften nicht bekannt.

Die JP 09327190 A (Patent Abstracts of Japan) zeigt eine Lageranordnung mit einer Vielzahl von unter einer metallenen Platte hängenden magnetischen Trägereinrichtungen, die eine flexible Antennenstruktur hängend lagern. Die Anziehungskraft der Magneten an die Metallplatte wird durch eine Regelungsvorrichtung geregelt, so daß die Magneten stets in einem geringen Abstand unterhalb der metallenen Platte schweben. Kommt es bei dieser Anordnung auch nur zu geringfügigem Verkippen einer Magnethalterung, so kann der magnetische Kontakt zur Metallplatte abreißen und die hängende Lageranordnung herunterfallen. Eine Luftlagerung ist hieraus nicht bekannt.

Satelliten sind zur Stromversorgung üblicherweise mit faltbaren Solarpanels ausgestattet, die während des Transports von der Erde in den Orbit zusammengefaltet sind und an der Außenhülle des Satelliten anliegen. Im Orbit werden diese dann nach dem Aussetzen des Satelliten mittels eines Entfaltungsmechanismus' zick-zack-artig entfaltet.

Dieses Entfalten der Solarpanels ist systemkritisch, da die Stromversorgung für den Satelliten ohne ausreichend und vollständig ausgefaltete Solarpanels nicht gewährleistet ist und dieser dann gar nicht oder nur eingeschränkt einsatzfähig ist. Daher sind der Entfaltungsvorgang auf der Erde zu simulieren und die entsprechende Mechanik zu testen.

Für diese Simulation und für diesen Testvorgang wurden bislang die Gelenke einer Solarpanel-Anordnung an einer an der Decke gelagerten Wälzlagerbahn aufgehängt, wobei sich die entsprechenden Aufhängungsvorrichtungen innerhalb der Wälzlagerbahn in Längs- und Querrichtung sowie in ihrem Aufhängungspunkt um die Vertikalachse herum bewegen konnten. Hierdurch wurde beim Entfaltungsvorgang eine grundsätzlich freie Bewegung der sich ausfaltenden Solarpanel-Anordnung erzielt. Allerdings treten in den Wälzlagern sowohl in Längsrichtung als auch in Querrichtung und auch im Drehlager der Aufhängung Reibungskräfte auf, die eine völlig freie Bewegung der sich ausfaltenden Solarpanel-Anordnung, wie dies im Weltraum unter Schwerelosigkeitsbedingungen der Fall ist, nicht gestatten. Darüber hinaus wird durch die Aufhängung der Solarpanels im Bereich ihrer Gelenke eine schwerkraftbedingte Axialkraft in den Gelenken erzeugt, die in den Gelenken Reibungswiderstände hervorruft, die unter Schwerelosigkeitsbedingungen nicht auftreten. Die Aufhängung der Solarpanels dieser allgemein bekannten und nicht durch Stand der Technik belegbaren Testeinrichtung ist daher nur bedingt geeignet, eine tatsächliche freie Bewegbarkeit der sich entfaltenden Solarpanels zu gewährleisten.

Nicht nur der vorstehend beschriebene Entfaltungsvorgang von Solarpaneln erfordert ein reibungsfrei bewegbares Lastaufhängungssystem. Auch in vielen anderen Bereichen der Fertigung-, Montage- oder Fördertechnik ist es erforderlich, hängende Lasten quasi reibungsfrei in einer horizontalen Ebene zu verfahren. Dies ist insbesondere dann notwendig, wenn eine hochgenaue Positionierung der Last erfolgen soll. In reibungsbehafteten Transportsystemen ist eine derartige hochgenaue Positionierung nicht möglich, da, bedingt durch die Reibung, stets eine, wenn auch nur geringfügig spürbare, ruckartige Bewegung des Fördersystems erfolgt.

Aus der US 4,860,600 ist ein Mikrogravitäts-Simulator bekannt, bei dem Luftlager eingesetzt werden, um eine zu testende Masse abzustützen. Allerdings wirken die Luftlager in dieser bekannten Anordnung entgegen der Schwerkraft, so daß hier eine stehende Anordnung, also eine Druckkraft, durch die Luftlager abgestützt wird. Bei sehr schmalen und hohen zu testenden Massen, wie dies beispielsweise bei Solarpanels der Fall ist, können jedoch schon geringste seitliche Auslenkungen Kippkräfte verursachen, die eine herkömmliche stehende Luftlagerung gemäß der US 4,860,600 durch Kippmomente außer Kraft setzen können. Eine stehende Gasdrucklager-Anordnung mit den gleichen Nachteilen ist auch aus der US 5,501,114 bekannt.

Es ist daher die Aufgabe der vorliegenden Erfindung, eine gattungsgemäße Lageranordnung zu schaffen, die einerseits Zugkräfte sicher abstützt und die andererseits eine nahezu reibungsfreie Bewegung in einer Ebene und um eine Hochachse herum zuläßt.

Diese Aufgabe wird von der Lageranordnung mit den Merkmalen des Patentanspruchs 1 gelöst. Dadurch, daß die Lagerköpfe einzeln an einer mit der zu lagernden Masse wirksam verbundenen Tragstruktur schwenkbar gelagert sind, können eventuell vorhandene Unebenheiten in einer der Lagerflächen ebenso ausgeglichen werden, wie geringe, ein Kippmoment auf die jeweiligen Lagerköpfe ausübende exogene Störungen, da sich die einzelnen Lagerköpfe jeweils optimal an das andere Lagerelement anlegen, ohne daß es dabei zu einer Vergrößerung des Abstandes zwischen den beiden Lagerflächen und damit zu einem Abheben des Lagerkopfs vom zweiten Lagerelement kommt. Zumindest eines der Lagerelemente weist in seiner Lagerfläche zumindest eine Gasaustrittsdüse auf, die von einem Druckgas beaufschlagt ist, so daß ein aus der beziehungsweise den Gasaustrittsdüsen austretender Gasstrom ein Gaspolster zwischen den aufgrund der Magnetkraft einander anziehenden Lagerelementen bildet, das die Lagerelemente voneinander beabstandet hält. Die magnetische Anziehungskraft zwischen den Lagerelementen ist dabei gleich der Summe aus der von der Masse und dem ersten Lagerelement ausgeübten Zugkraft und der Abstoßungskraft des Gaspolsters.

Die Kombination aus Magnethalterung und Druckgaslager ermöglicht es auf zuverlässige Weise, eine Haltekraft zwischen den beiden Lagerelementen aufzubauen, die die Zugkräfte zuverlässig abstützt, ohne daß dabei eine mechanische Verbindung der beiden Lagerelemente eingegangen wird.

Vorteilhaft ist bei der erfindungsgemäßen Lageranordnung, daß die hängende Anordnung der Masse und damit die Ausgestaltung der Lageranordnung als hängendes Lager und nicht als stehendes Lager, verhältnismäßig immun ist gegen Auslenkungen auch einer dünnen, hohen Masse, da in einer hängenden Lagerung stets ein stabiles Gleichgewicht herrscht, während in einer stehenden Lagerung immer ein labiles Gleichgewicht herrscht.

Auch vorteilhaft ist bei der erfindungsgemäßen Lageranordnung, daß das erste, magnetbestückte Lagerelement auch die Gasaustrittsdüsen für die Erzeugung des Gaspolsters aufweist. Diese Lageranordnung ist fertigungstechnisch und von Seiten des Vertriebs vorteilhaft, da nur ein Lagerelement technologisch hochwertig ausgestaltet sein muß, während das andere Lagerelement verhältnismäßig einfach gestaltet sein kann.

Vorteilhaft ist bei der erfindungsgemäße Ausgestaltung auch, daß das erste, magnetbestückte Lagerelement eine Mehrzahl von Lagereinrichtungen aufweist und das zweite Lagerelement von einer im wesentlichen ebenen Metalltafel gebildet ist. Das Vorsehen einer ebenen Metalltafel als zweites Lagerelement ermöglicht es, die gesamte Funktionalität der erfindungsgemäßen Lageranordnung auf das erste, magnetbestückte Lagerelement zu konzentrieren.

Die das zweite Lagerelement bildende Metalltafel ist ortsfest angeordnet und die erste, magnetbestückte Lagereinrichtung ist mit der zu lagernden Masse wirksam verbunden, wobei die Lagereinrichtungen jeweils als mit zumindest einem Magneten und mit Gasaustrittsdüsen versehener Lagerkopf ausgebildet sind.

Besonders vorteilhaft ist bei der erfindungsgemäße Ausgestaltung, daß die Lagerköpfe des ersten Lagerelements in einer Reihe angeordnet sind, wobei zumindest zwei Lagerköpfe vorgesehen sind, die jeweils an einem Ende eines waagebalkenartigen Tragbalkens lateral beweglich angelenkt sind, und wobei der Tragbalken mittelbar oder unmittelbar waagebalkenartig an einer Aufhängungsstruktur für die zu lagernde Masse schwenkbar gelagert ist. Diese erfindungsgemäße Ausgestaltung ermöglicht eine ideale gleichmäßige Kraftverteilung der Zugkraft auf die einzelnen Lagerköpfe und damit eine homogene, zuverlässig wirksame Zugkraftverteilung über die gesamte Lageranordnung.

Dabei ist insbesondere vorteilhaft, wenn die Tragstruktur in einer ersten Ebene eine geradzahlige Anzahl erster waagebalkenartiger Tragbalken aufweist, an deren jeweiligen Enden zwei einander benachbarte Lagerköpfe schwenkbar gelagert sind, wenn die Tragstruktur in einer zweiten Ebene eine Anzahl zweier waagebalkenartiger Tragbalken aufweist, an deren jeweiligen Enden zwei einander benachbarte erste Tragbalken waagebalkenartig schwenkbar gelagert sind und wenn die Tragstruktur vorzugsweise in einer oder mehreren weiteren Ebenen waagebalkenartige Tragbalken aufweist, an deren jeweiligen Enden zwei einander benachbarte Tragbalken der darüberliegenden Ebene waagebalkenartig schwenkbar gelagert sind, und wenn die unterste Ebene einen einzigen, letzten Tragbalken aufweist, der waagebalkenartig schwenkbar an der Aufhängungsstruktur für die zu lagernde Masse gelagert ist. Diese Ausgestaltung ermöglicht es, eine Vielzahl von Lagerköpfen vorzusehen und gleichzeitig zu gewährleisten, daß jeder Lagerkopf die gleiche Zugkraft übernimmt. Vorzugsweise sind als Magneten Permanentmagnete vorgesehen. Dieses hat den Vorteil, daß im Falle eines Systemausfalls die an der Lageranordnung hängende Masse nicht herabfällt, sondern durch die Anziehungskraft des Permanentmagneten an das zweite Lagerelement wirkt, so daß die zu haltende Masse bei einem Systemausfall nicht herabfällt.

Weiter vorteilhaft ist es, wenn zumindest ein Magnet von einem Elektromagneten gebildet ist. Hierdurch kann beispielsweise eine steuerbare Bremsvorrichtung für eine sich bewegende, an der Lageranordnung aufgehängte Masse geschaffen werden, wobei durch Ansteuerung des Elektromagneten bis hin zur Überwindung des Druckgaspolsters und zum physischen Kontakt mit der zweiten Lageranordnung eine Bremswirkung durch einen mit einem Elektromagneten versehenen Lagerkopf erzielt werden kann. Vorteilhaft ist insbesondere, wenn die Anziehungskraft des Elektromagneten und/oder die Abstoßungskraft des Gaspolsters regelbar sind. Hierdurch kann in begrenztem Umfang auch eine dynamische Last beherrscht werden, wobei durch Erhöhung der Kraft des Elektromagneten und durch Verringerung der Abstoßungskraft des Gaspolsters eine stärkere Anziehung der Lageranordnung an das zweite Lagerelement erzielt werden kann.

Von Vorteil ist auch, wenn die Gasaustrittsstruktur aus einer Vielzahl von um den Magneten herum angeordneten Gasaustrittsdüsen besteht, wobei insbesondere Mikrodüsen vorgesehen sein können, die für den Aufbau eines hochgradig wirksamen Gaspolsters sorgen.

Alternativ kann aber auch die Gasaustrittsstruktur zumindest eine Gasaustrittsdüse aufweisen, die mit einer nutartig um den Magneten herum angeordneten Luftverteilerstruktur in Fluidverbindung steht.

Bei einer besonders bevorzugten Ausgestaltung des Lagerkopfes ist das Gehäuse im wesentlichen axialsymmetrisch, vorzugsweise zylindrisch, ausgebildet, wobei sich die Lagerfläche orthogonal, vorzugsweise rundum orthogonal, zur Symmetrieachse des Lagerkopfes erstreckt, wobei der Magnet koaxial zur Symmetrieachse des Lagerkopfes angeordnet ist, wobei sich die inneren Feldlinien des Magneten im wesentlichen parallel zur Symmetrieachse erstrecken, und wobei die Gasaustrittsdüsen kreisförmig auf zumindest einem Ring um dem Magneten herum angeordnet sind, der ebenfalls koaxial zur Symmetrieachse gelegen ist. Diese besondere rotationssymmetrische Ausgestaltung des gesamten Lagerkopfes zeichnet sich dadurch aus, daß der Lagerkopf bei einer Bewegung keine Richtungspriorität besitzt, so daß eine Bewegung des Lagerkopfes in jede Translationsrichtung ohne Hindernisse und ohne Präferenzen möglich ist.

Alternativ dazu kann der Lagerkopf so ausgebildet sein, daß der Lagerkörper im Grundriß rechteckig oder trapezförmig ausgebildet ist und daß der Magnet ebenfalls im Grundriß rechteckig oder trapezförmig ausgebildet ist. Hierdurch wird eine eindeutige Richtungspräferenz der Lagerkörpers geschaffen, was dann von Vorteil sein kann, wenn eine vorgegebene Bewegungsrichtung des Lagerkörpers gezielt definiert werden soll, wie dies beispielsweise bei einem Transportsystem, welches die erfindungsgemäße Lageranordnung nutzt, vorteilhaft sein kann.

Besonders vorteilhaft ist es, wenn die Gasaustrittsdüsen in der Lagerfläche von mittels eines energiereichen Strahls gebohrten Mikrolöchern gebildet sind, die kegelförmig ausgebildet sind, wobei deren engster Querschnitt an der Mündung in die Lagerfläche gelegen ist. Diese Ausbildung der Gasaustrittsdüsen, die an sich bereits aus der DE 44 36 156 C1 bekannt ist, besitzt den Vorteil, daß der Luftverbrauch der Einzeldüsen äußerst niedrig ist und daß eine große Anzahl Düsen für eine hohe statische Tragkraft in den Lagerkörper eingebracht werden kann ohne dadurch den Gesamtluftverbrauch in unwirtschaftliche Bereiche steigen zu lassen. Im erfindungsgemäßen Lagerkopf liefert diese Ausgestaltung der Gasaustrittsdüsen in Verbindung mit dem im Lagerkopf vorgesehenen Magneten eine äußerst homogene Anziehung und Abstoßung der zusammenwirkenden Lagerelemente, so daß diese eine hohe, zuverlässige Tragfähigkeit besitzen.

Die erfindungsgemäße Lageranordnung, insbesondere wenn sie mit den erfindungsgemäßen Lagerköpfen ausgestattet ist, dient in einer bevorzugten Verwendung zur schwerkraftkompensierenden Aufhängung einer faltbaren Solarpanel-Anordnung für einen Satelliten in einer Testeinrichtung für eine die Schwerelosigkeit simulierende Erprobung des Entfaltungsvorgangs in einem Gravitationsfeld, wobei zumindest eine Lageranordnung vorgesehen ist, um die Solarpanel-Anordnung horizontal frei bewegbar aufzuhängen.

Dabei ist es besonders vorteilhaft, wenn mehrere Lageranordnungen vorgesehen sind, von denen jeweils eine Lageranordnung ein Solarpanel der aus mehreren Solarpanels bestehenden Solarpanel-Anordnung hängend horizontal frei bewegbar und um die durch den Schwerpunkt des jeweiligen Solarpanels verlaufende Vertikalachse frei drehbar lagert. Insbesondere diese Ausführungsform gestattet es, eine in der Aufhängung bereits reibungsfreie Bewegbarkeit der einzelnen Solarpanels zu gewährleisten und zudem das Auftreten von Axialkräften in den die Solarpanels miteinander verbindenden Gelenken zu verhindern, so daß auch in diesen Gelenken keine schwerkraftbedingten Reibungskräfte wirken.

Grundsätzlich sind die erfindungsgemäße Lageranordnung und insbesondere die erfindungsgemäßen Lagerköpfe auch dazu geeignet, jegliche andere Abstützung einer hängenden Last zu bewerkstelligen, so daß diese beispielsweise auch für ein sich im wesentlichen reibungsfrei bewegendes Fördersystem einsetzbar sind.

Die Erfindung wird nachfolgend anhand eines Beispiels unter Bezugnahme auf die Zeichnung näher erläutert. In dieser zeigt:
- **Fig. 1**: eine fast vollständig entfaltete Solarpanel-Anordnung mit einer Mehrzahl von erfindungsgemäßen Lageranordnungen zur hängenden Lagerung;
- **Fig. 2.**: eine detaillierte Zeichnung einer erfindungsgemäßen Lageranordnung gemäß der Einzelheit II in Fig. 1;
- **Fig. 3.**: eine perspektivische Ansicht eines Lagerkopfes einer erfindungsgemäßen Lageranordnung;
- **Fig. 4.**: einen Vertikalschnitt durch einen erfindungsgemäßen Lagerkopf und
- **Fig. 5.**: eine mittels der erfindungsgemäßen Lageranordnungen hochgenau positionierbare Montageeinrichtung in perspektivischer Ansicht von schräg unten.

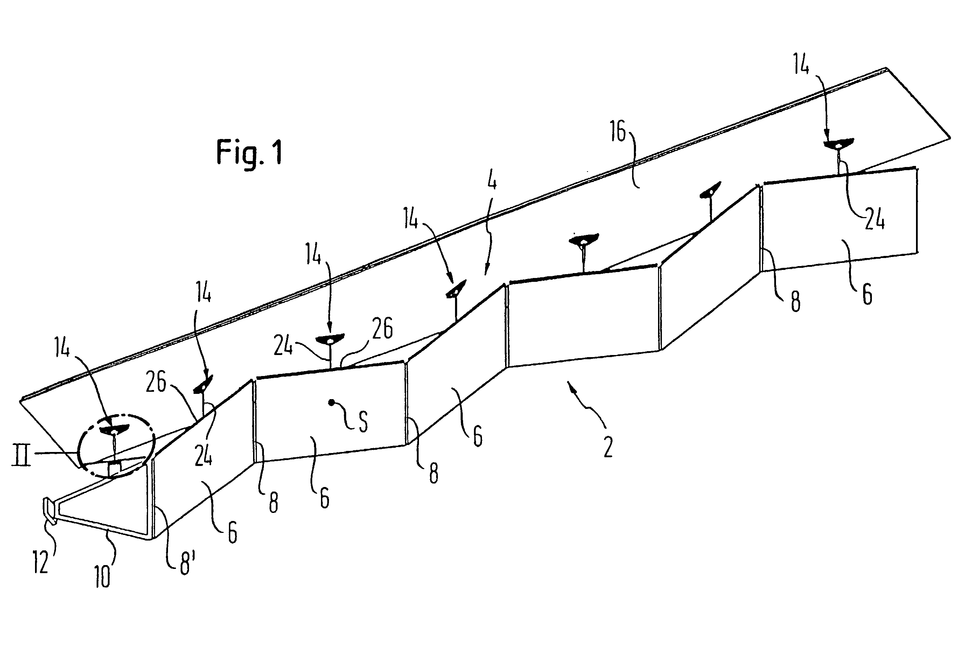

Fig. 1 zeigt eine Solarpanel-Anordnung 2, die mittels einer Lageranordnung 4 hängend und in der Horizontalen frei beweglich gelagert ist.

Die Solarpanel-Anordnung 2 umfaßt eine Mehrzahl von Solarpanels 6, die jeweils an zwei voneinander abgewandten Vertikalseiten über scharnierartige Gelenke 8 miteinander verbunden sind, so daß die Solarpanel-Anordnung 2 zick-zack-artig zusammen- und auseinanderfaltbar ist. Das erste Solarpanel 6 ist an seiner vom Gelenk 8 abgewandten Vertikalseite über ein scharnierartiges Gelenk 8' mit einer trapezförmigen Befestigungsstruktur 10 gelenkig verbunden, die an ihrem freien Ende eine an einem (nicht gezeigten) Satelliten anbringbare Befestigungsplatte 12 besitzt. In einer Testvorrichtung ist die Befestigungsplatte 12 ortsfest fixiert.

Die Lageranordnung 4 umfaßt eine Mehrzahl erster Lagerelemente 14 sowie ein mit den ersten Lagerelementen 14 zusammenwirkendes zweites Lagerelement 16.

Das zweite Lagerelement 16 weist eine sich im wesentlichen horizontal erstreckende, ebene Metalltafel auf.

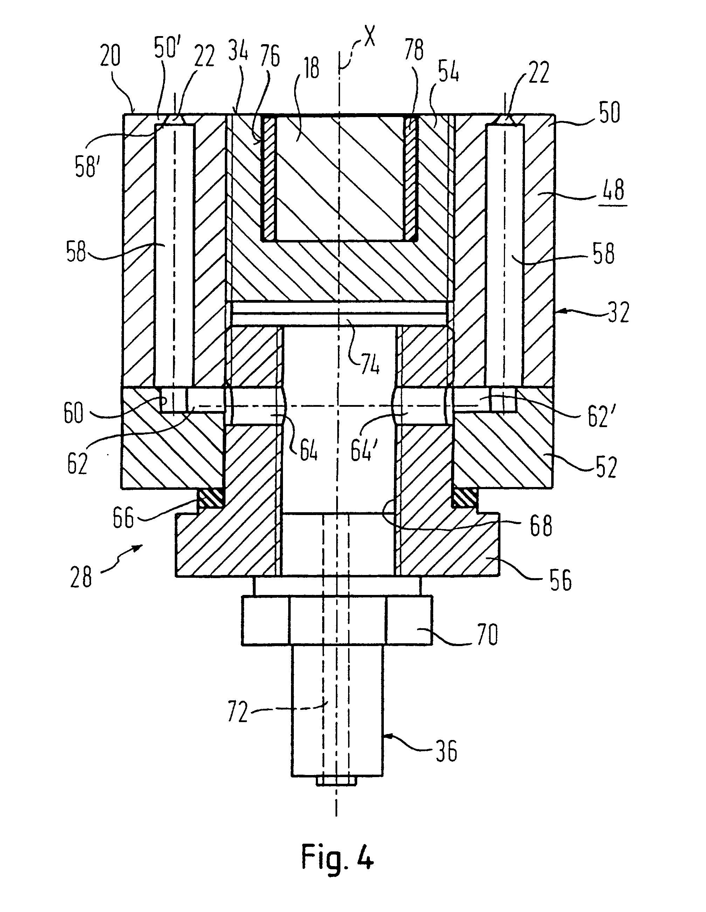

Die ersten Lagerelemente 14 weisen jeweils zumindest einen Magneten 18 auf, der das zugehörige Lagerelement 14 und das mit ihm wirksam verbundene Solarpanel 6 sowie die mit dem ersten Lagerelement 14 wirksam verbundene Befestigungsstruktur 10 mittels der Magnetkraft hängend unter dem die Metalltafel aufweisenden zweiten Lagerelement 16 hängend abstützt. Des weiteren weist jedes erste Lagerelement 14 in seiner Lagerfläche 20 Gasaustrittsdüsen 22 (Fig. 4) auf, die von einem Druckgas beaufschlagt sind, wobei ein aus den Gasaustrittsdüsen 22 austretender Gasstrom ein Gaspolster zwischen dem jeweiligen ersten Lagerelement 14 und dem zweiten Lagerelement 16 bildet, das die Lagerelemente 14, 16 voneinander beabstandet hält. Der Gasdruck des austretenden Gasstromes ist dabei derart eingestellt, daß die Summe der durch ihn hervorgerufenen Abstoßungskraft des Gaspolsters und der von der Masse der Solarpanel-Anordnung 2 und der ersten Lagerelemente 14 ausgeübten Zugkraft gleich der magnetischen Anziehungskraft zwischen den Lagerelementen 14, 16 ist. Auf diese Weise werden die ersten Lagerelemente 14 zusammen mit der an ihnen angebrachten Solarpanel-Anordnung 2 schwebend unter dem zweiten Lagerelement 16 gehalten, ohne daß die beiden Lagerelemente 14, 16 einander berühren. Diese schwebende Lagerung ermöglicht eine freie Bewegbarkeit der Solarpanels 6 der Solarpanel-Anordnung 2 entlang dem zweiten Lagerelement 16 (also in diesem Beispiel in Horizontalrichtung) und eine freie Bewegbarkeit um die Vertikalachse eines jeden ersten Lagerelements 14 herum, so daß das beschriebene System drei Freiheitsgrade aufweist.

Sowohl die Magneten 18 als auch die Gasaustrittsdüsen 22 müssen nicht zwangsläufig im hängenden ersten Lagerelement angeordnet sein, obwohl dies eine besonders vorteilhafte Ausgestaltung der Erfindung ist; die Gasaustrittsdüsen und/oder die Magneten 18 können auch im tafelartigen zweiten Lagerelement 16 angeordnet sein, wobei dann für die Gasaustrittsdüsen 22 sinnvollerweise eine Aktivierungseinrichtung vorgesehen ist, die nur jene Gasaustrittsdüsen aktiviert, in deren Bereich sich ein hängendes erstes Lagerelement 14 befindet.

In Fig. 1 ist außerdem zu erkennen, daß die ersten Lagerelemente 14 jeweils über eine vertikale Zugstange 24 mit einem an der Oberkante eines jeden Solarpanels 6 angebrachten Horizontalträger 26 befestigt sind, wobei die Zugstange vertikal über dem Masseschwerpunkt S eines jeden Solarpanels 6 angebracht ist. Auf diese Weise wird das Entstehen von Vertikalkräften in den die Solarpanels 6 miteinander verbindenden scharnierartigen Gelenken 8 vermieden. Eine ähnliche Konstruktion mit derselben Wirkung für das scharnierartige Gelenk 8' ist auch für die hängende Lagerung der Befestigungsstruktur 10 vorgesehen.

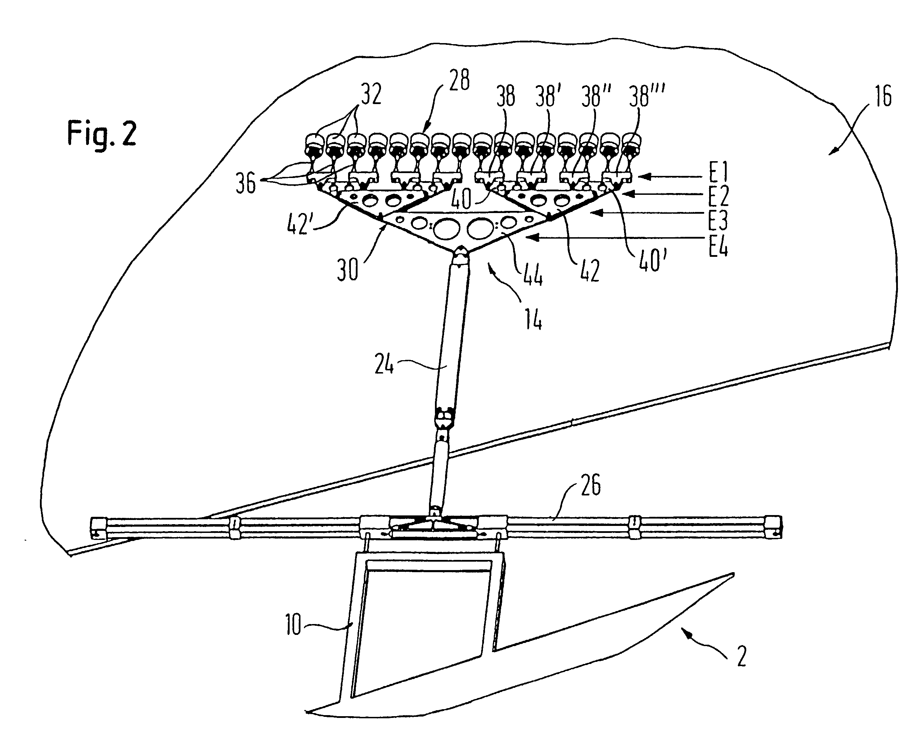

Der Aufbau eines jeden Lagerelements 14 wird nun anhand der Fig. 2 erläutert.

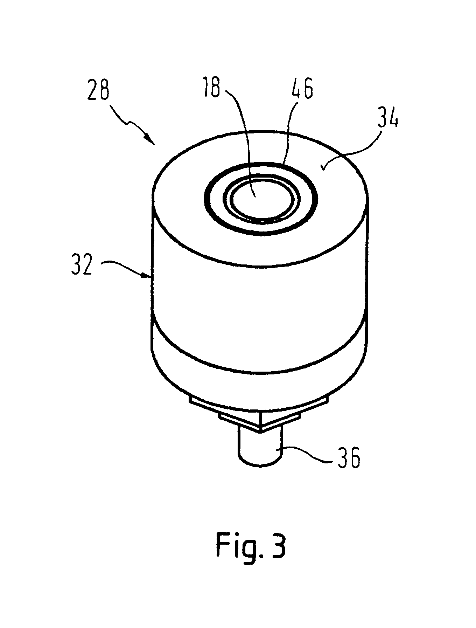

In Fig. 2 ist eine vergrößerte Ansicht eines unter dem zweiten Lagerelement 16 hängenden ersten Lagerelements 14 gezeigt. Das erste Lagerelement 14 umfaßt neben der Zugstange 24 und dem das Solarpanel 6 beziehungsweise im Beispiel der Fig. 2 die Befestigungsstruktur 10 halternden Horizontalträger 26 eine Mehrzahl von Lagereinrichtungen 28 sowie eine Tragstruktur 30. Jede Lagereinrichtung 28 umfaßt einen Lagerkopf 32 mit einer oberen, zum zweiten Lagerelement 16 hin gerichteten Lagerfläche 34 sowie eine auf der von der Lagerfläche 34 abgewandten Unterseite angebrachte Zugstrebe 36. Der Aufbau der Lagereinrichtung 28 wird später anhand der Fig. 3 und 4 beschrieben.

Die Tragstruktur 30 umfaßt eine Vielzahl von in mehreren übereinander gelegenen Ebenen E1, E2, E3 und E4 angeordneten Tragbalken 38, 38', 38'', 38'''; 40, 40'; 42, 42'; 44. Die unterste Ebene E4 der Tragstruktur 30 besteht aus einem waagebalkenartigen Tragbalken 44, der die Kontur eines gleichschenkligen Dreiecks aufweist und im Bereich der Spitze des Dreiecks, die durch die beiden gleichen Schenkel gebildet ist, schwenkbar am oberen Ende der Zugstange 24 angelenkt ist. An den beiden anderen Spitzen des Tragbalkens 44 ist jeweils ein weiterer Tragbalken 42, 42', der ebenfalls in Form eines gleichschenkligen Dreiecks ausgebildet ist, im Bereich seiner von den gleichlangen Schenkeln gebildeten Spitze schwenkbar gelagert. Die beiden Tragbalken 42, 42' bilden die nächsthöhere Ebene E3 der Tragstruktur 30. Die oberhalb der Tragbalken 42, 42' gelegene Anordnung ist jeweils gleichartig aufgebaut, so daß nachfolgend nur die oberhalb des Tragbalkens 42 gelegene Struktur beschrieben wird.

An den beiden weiteren Spitzen des Tragbalkens 52 ist jeweils ein Tragbalken 40, 40' einer darüber gelegenen Ebene E2 der Tragstruktur 30 auf dieselbe Weise schwenkbar gelagert angebracht, wie die Tragbalken 42, 42' am Tragbalken 44. Auch diese Tragbalken 40, 40' lagern an ihren freien Spitzen jeweils wieder einen Tragbalken 38, 38' beziehungsweise 38'', 38''' einer darübergelegenen Ebene E1 in gleicher Weise schwenkbar und waagebalkenartig. Auch die Tragbalken 38, 38', 38'', 38''' sind ähnlich wie die darunter gelegenen waagebalkenartigen Tragbalken aufgebaut, wobei die jeweiligen Anlenkpunkte an den Spitzen eines gedachten gleichschenkligen Dreiecks liegen. Die beiden oberen Anlenkpunkte der obersten Tragbalken 38, 38', 38'', 38''' lagern jeweils schwenkbar das untere Ende der Zugstrebe 36 einer zugeordneten Lagereinrichtung 28. Die vorstehend beschriebene Schwenkarbeit der einzelnen Elemente, zumindest aber die der Zugstreben 36 an den obersten Tragbalken 38, 38', 38'', 38''', ist nicht auf die Richtung der von den Tragbalken gebildeten Ebene beschränkt, sondern ist auch quer zu dieser Ebene möglich.

Durch diesen Aufbau der Tragstruktur 30 ist gewährleistet, daß die über die Zugstange 24 in die Tragstruktur 30 eingeleitete Zugkraft unabhängig von etwa an der Zugstange 24 angreifenden Lateralkomponenten der Zugkraft in ausschließlich vertikaler Kraftrichtung, das heißt in Richtung der jeweiligen Längsachse X der Lagereinrichtungen 28 in die jeweilige Lagereinrichtung 28 eingeleitet wird. Aus diesem Grund treten an der Lagerfläche 34 einer jeden Lagereinrichtung 28 keine Kippkräfte auf, so daß der Abstand zwischen der Lagerfläche 34 der jeweiligen Lagereinrichtung 28 und der nach unten weisenden Lagerfläche des zweiten Lagerelements 16 konstant ist. Hierdurch wird gewährleistet, daß ein gleichmäßig dickes Gaspolster zwischen der jeweiligen Lagereinrichtung 28 und dem zweiten, oberen Lagerelement 16 ausgebildet wird, so daß die Verlagerung einer Lagerfläche 34 aus ihrer Idealposition und damit eine Schwächung der Magnethaltekraft sowie ein Zusammenbrechen des Gaspolsters sicher vermieden sind. Außerdem wird auf diese Weise vermieden, daß bei einer Kippung der Lagerfläche 34 eine schräg gerichtete Kraftkomponente des aus den Gasaustrittsdüsen austretenden Gasstromes eine seitliche Bewegung des ersten Lagerelements 14 verursacht, so daß auch hierdurch eine freie Bewegbarkeit der am ersten Lagerelement 14 hängenden Solarpanel-Anordnung 2 in Horizontalrichtung gewährleistet ist.

Fig. 3 zeigt eine perspektivische Ansicht einer einzelnen zylindrischen Lagereinrichtung 28 von schräg oben. An der Oberseite der Lagereinrichtung 28 ist die Lagerfläche 34 zu erkennen, in deren Zentrum die Stirnfläche des ebenfalls zylindrisch ausgebildeten Permanentmagneten 18 gelegen ist. Um den Permanentmagneten 18 herum ist, in Fig. 3 schematisch als Ring 46 dargestellt, eine Vielzahl von Mikrodüsen 22 als Gasaustrittsstruktur 47 für den Austritt des Gasstroms vorgesehen.

Der Aufbau der Lagereinrichtung 28 wird nachfolgend anhand des in Fig. 4 dargestellten Vertikalschnitts beschrieben.

Die Lagereinrichtung 28 besteht aus einem Lagerkopf 32 und der Zugstrebe 36. Der zylindrische Lagerkopf 32 weist ein Gehäuse 48 auf, das den Magneten 18 aufnimmt und in dem die Gasverteilerstruktur für die Gasaustrittsdüsen 22 ausgebildet ist. Das Gehäuse 48 besteht aus einem oberen äußeren Ringmantel 50, einem unteren äußeren Ringmantel 52, einem oberen inneren Kern 54 und einem unteren inneren Kern 56.

Die Gasaustrittsdüsen 22 sind im oberen äußeren Ringmantel 50 in der in Fig. 4 oben gelegenen Lagerfläche 34 ausgebildet. Im Inneren des oberen äußeren Ringmantels 50 ist hinter den Gasaustrittsdüsen 22 ein Ringkanal 58 vorgesehen, der zum unteren äußeren Ringmantel 52 hin offen ist.

Der untere äußere Ringmantel 52 ist an seiner nach oben zum oberen äußeren Ringmantel 50 weisenden Fläche mit einem nutartigen Ringkanal 60 versehen, der nach dem Zusammenbau der beiden Ringmäntel 50, 52 in Fluidverbindung mit dem Ringkanal 58 steht. Vom Ringkanal 60 des unteren äußeren Ringmantels verlaufen nach radial einwärts gerichtete Radialkanäle 62, 62', die mit Radialkanälen 64, 64' im unteren inneren Kern 56 in Fluidverbindung stehen, wenn dieser in die zusammengebauten Ringmäntel 50, 52 eingesetzt ist. Die Ringmäntel 50, 52 sind auf dem Fachmann bekannte Weise, beispielsweise durch Schweißen, Kleben, Schrauben oder ähnliches, abdichtend aneinandergefügt.

Der untere innere Kern 56 wird mittels eines Außengewindes in ein in der Innenwandung der Einheit aus dem oberen äußeren Ringmantel 50 und dem unteren äußeren Ringmantel 52 vorgesehenes Innengewinde eingeschraubt, wobei eine Ringdichtung 66 zwischen der unteren Stirnfläche des unteren äußeren Ringmantels 52 und einer oberen ringförmigen Fläche des flanschartig ausgebildeten unteren Abschnitts des unteren inneren Kerns 56 eingesetzt ist und für eine Abdichtung zwischen dem unteren inneren Kern 56 und der Einheit aus den beiden Ringmänteln 50, 52 sorgt.

Der untere innere Kern 56 besitzt eine zentrale Gewindebohrung 68, die in Fluidverbindung mit den Radialkanälen 64, 64' in der Wandung des unteren inneren Kerns 56 steht. In die zentrale Gewindebohrung 68 ist ein Fluidanschlußstück 70 eingeschraubt, welches am oberen Ende der Zugstrebe 36 ausgebildet ist und einen Zuführkanal 72 für das Druckgas aufweist. Der Zuführkanal 72 ist in an sich bekannter Weise mit einem Schlauchanschluß für einen (nicht gezeigten) Gaszuführschlauch versehen, der mit einer (nicht gezeigten) Druckgasquelle verbunden ist.

Der obere innere Kern 54 ist ebenfalls in das mit Gewinde versehene Innere des oberen äußeren Ringmantels 50 eingeschraubt, wobei zwischen dem oberen inneren Kern 54 und dem unteren inneren Kern 56 zumindest eine Dichtungsplatte 74 vorgesehen ist. Im Bereich seiner oberen, die Lagerfläche 34 bildenden Stirnfläche ist der obere innere Kern 54 mit einer zentralen Sacklochbohrung 76 versehen, in die der Magnet 18 eingesetzt und beispielsweise mit einer den Magneten 18 umgebenden Vergußmasse 78 fixiert ist. Der obere äußere Ringmantel 50, der obere innere Kern 54, der Magnet 18 und die Vergußmasse 78 bilden gemeinsam an ihrer Oberseite die ebene Lagerfläche 34.

Die Gasaustrittsdüsen 22 sind als Mikrodüsen ausgebildet, die mittels eines energiereichen Strahls, beispielsweise eines Laserstrahls in dem dünnen Wandungsabschnitt 50' zwischen der Lagerfläche 34 und der Bodenfläche 58' des Ringkanals 58 ausgebildet werden. Die Gasaustrittsdüsen 22 verlaufen dabei, wie in Fig. 4 erkennbar ist, sich vom Ringkanal 58 zur Lagerfläche 34 hin konisch verjüngend.

Das in den Zuführkanal 72 eingeleitete Druckgas tritt in die zentrale Gewindebohrung 68 des unteren inneren Kerns 56 ein und strömt von dort durch die Radialkanäle 64, 64' und 62, 62' in den Ringkanal 60 im unteren äußeren Ringmantel 52 und weiter in den Ringkanal 58 im oberen äußeren Ringmantel 50, aus dem es durch die Gasaustrittsdüsen 22 austritt.

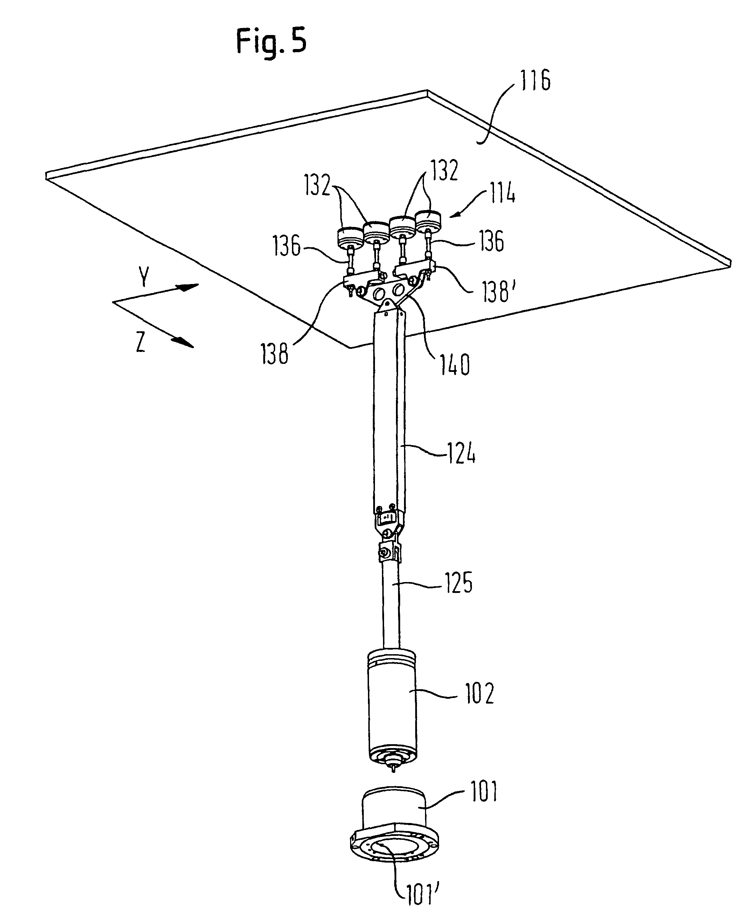

Fig. 5 zeigt ein Beispiel, bei dem die erfindungsgemäße Lageranordnung in einem Lastfördersystem vorgesehen ist, mit dem eine hängende Last hochgenau positionierbar ist.

Ein vier Lagerköpfe 132 aufweisendes erstes Lagerelement 114 ist in bereits geschilderter Weise wie im ersten Beispiel an einer als zweites Lagerelement 116 dienenden Deckenstruktur durch Magnetkraft aufgehängt. Das erste Lagerelement 114 weist zwei Tragbalken 138, 138' auf, die an ihren jeweiligen Enden über Zugstreben 136 mit einem jeweils zugeordneten Lagerkopf 132 verbunden sind. In der Mitte sind die Tragbalken 138, 138' jeweils waagebalkenartig mit den Enden eines darunter gelegenen gemeinsamen Tragbalkens 140 schwenkbar gelenkig verbunden und dieser gemeinsame Tragbalken 140 ist an seiner Mitte gelenkig mit einer Zugstange 124 schwenkbar verbunden, an deren unterem Ende die Last 102 über eine Hilfs-Zugstange 125 ebenfalls schwenkbar gehaltert ist. Die Last 102 besteht im vorliegenden Beispiel aus einer Welle, die in eine in der Fig. 5 frei im Raum dargestellte, in der Realität jedoch auf einer Montageplatte fixierte Lagerbuchse 101 einzusetzen ist.

Das erste Lagerelement 114 ist zusammen mit der daran aufgehängten Last 102 in horizontaler Richtung in der durch die Achsen Y und Z aufgespannten und von der Deckenstruktur gebildeten Ebene ohne Reibung frei bewegbar, wie dies bereits in Zusammenhang mit dem ersten Beispiel beschrieben worden ist. Ein nicht näher gezeigter Translationsantrieb für das erste Lagerelement 14 sorgt für die gewünschte Translationsbewegung in der von den Achsen Y und Z aufgespannten Ebene.

Ist die die Last 102 bildende Welle exakt über der Aufnahmebohrung 101' der auf dem Montagetisch fixierten Lagerbuchse 101 plaziert, so wird die Welle in die Aufnahmebohrung 101' der Lagerbuchse 101 abgesenkt. Um dieses Absenken zu ermöglichen, ist entweder die Zugstange 124 oder die Hilfs-Zugstange 125 teleskopartig nach unten ausfahrbar.

Zur besseren Positionierung der Last am erreichten Abladeort kann der aus den Gasaustrittsdüsen der Lagerköpfe 132 austretende Gasstrom reduziert werden, so daß die Magnetkraft überwiegt und so eine unerwünschte seitwärtsbewegung des ersten Lagerelements 114 mit der daran hängenden Last vermieden wird.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 2: Solarpanel-Anordnung
- 4: Lageranordnung
- 6: Solarpanel
- 8: Scharnierartiges Gelenk
- 8': Scharnierartiges Gelenk
- 10: Befestigungsstruktur
- 12: Befestigungsplatte
- 14: Erstes Lagerelement
- 16: Zweites Lagerelement
- 18: Magnet
- 20: Lagerfläche
- 22: Gasaustrittsdüse
- 24: Zugstange
- 26: Horizontalträger
- 28: Lagereinrichtung
- 30: Tragstruktur
- 32: Lagerkopf
- 34: Lagerfläche
- 36: Zugstrebe
- 38: Tragbalken
- 38': Tragbalken
- 38'': Tragbalken
- 38''': Tragbalken
- 40: Tragbalken
- 40': Tragbalken
- 42: Tragbalken
- 42': Tragbalken
- 44: Tragbalken
- 46: Ring
- 48: Gehäuse
- 50: Oberer äußerer Ringmantel
- 52: Unterer äußerer Ringmantel
- 54: Oberer innerer Kern
- 56: Unterer innerer Kern
- 58: Ringkanal
- 60: Ringkanal
- 62: Radialkanal
- 62': Radialkanal
- 64: Radialkanal
- 64': Radialkanal
- 66: Ringdichtung
- 68: Zentrale Gewindebohrung
- 70: Fluidanschlußstück
- 72: Zuführkanal
- 74: Dichtungsplatte
- 76: Sacklochbohrung
- 78: Vergußmasse
- 101: Lagerbuchse
- 101': Aufnahmebohrung
- 102: Last
- 114: Lagerelement
- 116: Ebene
- 124: Zugstange
- 125: Hilfs-Zugstange
- 132: Lagerköpfe
- 136: Zugstreben
- 138: Tragbalken
- 138': Tragbalken
- 140: Tragbalken

- S: Masseschwerpunkt eines Solarpanels
- X: Symmetrieachse des Lagerkopfes
- E1 bis E4: Ebenen der Tragstruktur

## Patentansprüche

1. Lageranordnung zum Abstützen einer hängenden Last (2)
- wobei die Lageranordnung (4) ein erstes und ein zweites Lagerelement (14, 16) aufweist,
- wobei eines der Lagerelemente zumindest einen Magneten (18) aufweist und
- wobei das andere Lagerelement ein Metall umfaßt, an das sich das eine Lagerelement magnetisch anzieht,
- wobei zumindest eines der Lagerelemente (14; 16) in seiner Lagerfläche (20) zumindest eine Gasaustrittsdüse (22) aufweist, die von einem Druckgas beaufschlagt ist, so daß ein aus der Gasaustrittsdüse (22) austretender Gasstrom ein Gaspolster zwischen den aufgrund der Magnetkraft einander anziehenden Lagerelementen (14, 16) bildet, das die Lagerelemente (14, 16) voneinander beabstandet hält und
- wobei ein erstes (14) der Lagerelemente (14, 16) eine Mehrzahl von Lagerköpfen (32) aufweist,
**dadurch gekennzeichnet,**
- **daß** die Lagerköpfe (32) einzeln an einer mit der zu lagernden Last (2) wirksam verbindbaren Tragstruktur (30) schwenkbar gelagert sind, damit sich die einzelnen Lagerköpfe (32) jeweils optimal an das zweite (16) der Lagerelemente (14, 16) anlegen,
- **daß** die Gasaustrittsdüsen (22) in dem ersten Lagerelement (14) vorgesehen sind, wobei jeder Lagerkopf (32) zumindest eine Gasaustrittsdüse (22) für die Erzeugung des Gaspolsters aufweist,
- **daß** jeder Lagerkopf (32) des ersten Lagerelements (14) mit zumindest einem der Magneten (18) versehen ist und
- **daß** das zweite Lagerelement (16) das Metall umfaßt und im wesentlichen eben ausgebildet ist,
- **daß** das zweite Lagerelement (16) von einer ortsfesten Metalltafel gebildet ist,
- **daß** die Lagerköpfe (32) des ersten Lagerelements (14) in einer Reihe angeordnet sind,
- **daß** zumindest zwei Lagerköpfe (32) vorgesehen sind, die jeweils an einem Ende eines waagebalkenartigen Tragbalkens (38, 38', 38'', 38''') lateral beweglich angelenkt sind, und
- **daß** der Tragbalken (38, 38', 38'', 38''') mittelbar oder unmittelbar waagebalkenartig an einer Aufhängungsstruktur (24, 26) für die zu lagernde Last (2) schwenkbar gelagert ist.

2. Lageranordnung nach Anspruch 1,
**dadurch gekennzeichnet,**
- **daß** die Tragstruktur (30) in einer ersten Ebene (E1) eine geradzahlige Anzahl erster waagebalkenartiger Tragbalken (38, 38', 38'', 38''') aufweist, an deren jeweiligen Enden zwei einander benachbarte Lagerköpfe (32) schwenkbar gelagert sind,
- **daß** die Tragstruktur (30) in einer zweiten Ebene (E2) eine Anzahl zweiter waagenbalkenartiger Tragbalken (40, 40') aufweist, an deren jeweiligen Enden zwei einander benachbarte erste Tragbalken (38, 38'; 38'', 38''') waagebalkenartig schwenkbar gelagert sind und
- **daß** die Tragstruktur (30) vorzugsweise in einer oder mehreren weiteren Ebenen (E3) waagebalkenartige Tragbalken (42, 42') aufweist, an deren jeweiligen Enden zwei einander benachbarte Tragbalken (40, 40') der darüberliegenden Ebene (E2) waagebalkenartig schwenkbar gelagert sind, und
- **daß** die unterste Ebene (E4) einen einzigen, letzten Tragbalken (44) aufweist, der waagebalkenartig schwenkbar an der Aufhängungsstruktur (24, 26) für die zu lagernde Last (2) gelagert ist.

3. Lageranordnung nach einem der vorhergehenden Ansprüche,
**dadurch gekennzeichnet,**
**daß** als Magneten (18) Permanentmagnete vorgesehen sind.

4. Lageranordnung nach einem der vorhergehenden Ansprüche,
**dadurch gekennzeichnet,**
**daß** zumindest einer der Magneten (18) von einem Elektromagneten gebildet ist.

5. Lageranordnung nach Anspruch 4,
**dadurch gekennzeichnet,**
**daß** die Anziehungskraft des Elektromagneten und/oder die Abstoßungskraft des Gaspolsters regelbar sind.

6. Lageranordnung nach einem der vorhergehenden Ansprüche,
**dadurch gekennzeichnet,**
- **daß** der Lagerkopf (32) ein Gehäuse aufweist, in welches der zumindest eine Magnet (18) integriert ist,
- **daß** das Gehäuse eine Lagerfläche (34) des Lagerkopfes (32) bildet, wobei im Gehäuse in der Lagerfläche (34) um den Magneten (18) herum zumindest eine Gasaustrittsstruktur (47) vorgesehen ist, die zumindest eine Gasaustrittsdüse (22) aufweist.

7. Lageranordnung nach einem der vorhergehenden Ansprüche,
**dadurch gekennzeichnet,**
**daß** die Gasaustrittsdüse (22) in der Lagerfläche (34) von mittels eines energiereichen Strahls gebohrten Mikrolöchern gebildet ist, die kegelförmig ausgebildet sind, wobei deren engster Querschnitt an der Mündung in die Lagerfläche (34) gelegen ist.

8. Lageranordnung nach Anspruch 6 oder 7,
**dadurch gekennzeichnet,**
**daß** die Gasaustrittsstruktur (47) eine Mehrzahl von um den Magneten (18) herum angeordneten Gasaustrittsdüsen (22) aufweist.

9. Lageranordnung nach Anspruch 6 oder 7,
**dadurch gekennzeichnet,**
**daß** die Gasaustrittsdüse (22) mit einer um den Magneten herum angeordneten Gehäusenut in Fluidverbindung steht.

10. Lageranordnung nach einem der Ansprüche 6 bis 9,
**dadurch gekennzeichnet,**
- **daß** das Gehäuse (48) im wesentlichen axialsymmetrisch, vorzugsweise zylindrisch, ausgebildet ist, wobei sich die Lagerfläche (34) orthogonal, vorzugsweise rundum orthogonal, zur Symmetrieachse (X) des Lagerkopfes (32) erstreckt,
- **daß** der Magnet koaxial zur Symmetrieachse (X) des Lagerkopfes (32) angeordnet ist, wobei sich die inneren Feldlinien des Magneten (18) im wesentlichen parallel zur Symmetrieachse (X) erstrecken, und
- **daß** die Gasaustrittsdüsen (22) kreisförmig auf zumindest einem Ring (46) um den Magneten (18) herum angeordnet sind, der ebenfalls koaxial zur Symmetrieachse (X) gelegen ist.

11. Lageranordnung nach einem der Ansprüche 6 bis 9,
**dadurch gekennzeichnet,**
- **daß** der Lagerkopf im Grundriß rechteckig oder trapezförmig ausgebildet ist und
- **daß** der Magnet im Grundriß rechteckig oder trapezförmig ausgebildet ist.

12. Verwendung der Lageranordnung (4) gemäß einem der Ansprüche 1 bis 11, zur schwerkraftkompensierenden Aufhängung einer faltbaren Solarpanel-Anordnung (2) für einen Satelliten in einer Testeinrichtung für eine die Schwerelosigkeit simulierende Erprobung des Entfaltungsvorgangs in einem Gravitationsfeld, wobei zumindest eine Lageranordnung (4) vorgesehen ist, um die Solarpanel-Anordnung (2) horizontal frei bewegbar aufzuhängen.

13. Verwendung nach Anspruch 12,
**dadurch gekennzeichnet,**
**daß** mehrere Lageranordnungen (4) vorgesehen sind, von denen jeweils eine Lageranordnung (4) ein Solarpanel (6) der aus mehreren Solarpanels (6) bestehenden Solarpanel-Anordnung (2) hängend horizontal frei bewegbar und um die durch den Schwerpunkt (S) des jeweiligen Solarpanels (6) verlaufende Vertikalachse (X) frei drehbar lagert.

## Claims

1. Bearing arrangement for supporting a suspended load (2)
• wherein the bearing arrangement (4) has a first and a second bearing element (14, 16),
• wherein one of the bearing elements has at least one magnet (18) and
• wherein the other bearing element comprises a metal, to which the one bearing element is magnetically attracted,
• wherein at least one of the bearing elements (14; 16) has at least one gas discharge nozzle (22) in its bearing surface (20), said nozzle being fed with a compressed gas so that a gas stream discharging from the gas discharge nozzle (22) forms a gas cushion between the bearing elements (14, 16) attracting one another as a result of the magnetic force, said gas cushion holding the bearing elements (14, 16) at a distance from one another, and
• wherein a first (14) of the bearing elements (14, 16) has a plurality of bearing heads (32),
**characterised in that**
• the bearing heads (32) are disposed to swivel individually on a support structure (30), which can be actively connected to the load to be held, so that the individual bearing heads (32) respectively abut against the second (16) of the bearing elements (14, 16) in an optimum manner,
• that the gas discharge nozzles (22) are provided in the first bearing element (14), wherein each bearing head (32) has at least one gas discharge nozzle (22) for generation of the gas cushion,
• that each bearing head (32) of the first bearing element (14) is provided with at least one of the magnets (18) and
• that the second bearing element (16) comprises the metal and is configured essentially plane,
• that the second bearing element (16) is formed by a fixed metal plate,
• that the bearing heads (32) of the first bearing element (14) are arranged in a row,
• that at least two bearing heads (32) are provided, which are respectively articulated on an end of a balance beam-like support beam (38, 38', 38", 38"') to be laterally movable, and
• that the support beam (38, 38', 38", 38"') is disposed on a suspension structure (24, 26) for the load (2) to be held to swivel directly or indirectly in the manner of a balance beam.

2. Bearing arrangement according to Claim 1,
**characterised in that**
• in a first plane (E1) the support structure (30) has an even number of first balance beam-like support beams (38, 38', 38", 38"'), at the respective ends of which two adjacent bearing heads (32) are disposed to swivel,
• that in a second plane (E2) the support structure (30) has a number of second balance beam-like support beams (40, 40'), at the respective ends of which two adjacent first support beams (38, 38'; 38", 38"') are disposed to swivel in the manner of a balance beam, and
• that in one or more further planes (E3) the support structure (30) preferably has balance beam-like support beams (42, 42'), at the respective ends of which two adjacent support beams (40, 40') of the plane (E2) above are disposed to swivel in the manner of a balance beam, and
• that the lowest plane (E4) has a single last support beam (44), which is disposed to swivel in the manner of a balance beam on the suspension structure (24, 26) for the load to be held (2).

3. Bearing arrangement according to one of the preceding claims, **characterised in that** permanent magnets are provided as magnets (18).

4. Bearing arrangement according to one of the preceding claims, **characterised in that** at least one of the magnets (18) is formed by an electromagnet.

5. Bearing arrangement according to Claim 4, **characterised in that** the attracting force of the electromagnet and/or the repelling force of the gas cushion are controllable.

6. Bearing arrangement according to one of the preceding claims, **characterised in that**
• the bearing head (32) has a housing, into which the at least one magnet (18) is integrated,
• that the housing forms a bearing surface (34) of the bearing head (32), wherein at least one gas discharge structure (47) having at least one gas discharge nozzle (22) is provided around the magnet (18) in the housing in the bearing surface (34).

7. Bearing arrangement according to one of the preceding claims, **characterised in that** the gas discharge nozzle (22) in the bearing surface (34) is formed by micro-holes, which are drilled by means of a high-energy jet and are configured in a conical shape, their narrowest cross-section being located at the mouth into the bearing surface (34).

8. Bearing arrangement according to Claim 6 or 7, **characterised in that** the gas discharge structure (47) has a plurality of gas discharge nozzles (22) arranged around the magnet (18).

9. Bearing arrangement according to Claim 6 or 7, **characterised in that** the gas discharge nozzle (22) connects fluidically with a housing groove arranged around the magnet.

10. Bearing arrangement according to one of Claims 6 to 9, **characterised in that**
• the housing is of essentially axially symmetric, preferably cylindrical, configuration, wherein the bearing surface (34) extends orthogonally, preferably all-around orthogonally, to the axis of symmetry (X) of the bearing head (32),
• that the magnet is arranged coaxially to the axis of symmetry (X) of the bearing head (32), wherein the internal lines of flux of the magnet (18) extend essentially parallel to the axis of symmetry (X), and
• that the gas discharge nozzles (22) are arranged in a circular shape on at least one ring (46) around the magnet (18), which is likewise located coaxially to the axis of symmetry (X).

11. Bearing arrangement according to one of Claims 6 to 9, **characterised in that**
• the bearing head is rectangular or trapezoidal in plan form and
• that the magnet is rectangular or trapezoidal in plan form.

12. Use of the bearing arrangement (4) according to one of Claims 1 to 11 for gravity-compensating suspension of a foldable solar panel array (2) for a satellite in a test system for a trial of the unfolding process in a gravitational field simulating weightlessness, wherein at least one bearing arrangement (4) is provided in order to suspend the solar panel array (2) to be freely movable horizontally.

13. Use according to Claim 12, **characterised in that** a plurality of bearing arrangements (4) are provided, of which one respective bearing arrangement (4) holds one solar panel (6) of the solar panel array (2) comprising several solar panels (6) suspended to be freely movable horizontally and to be freely rotatable around the vertical axis (X) running through the centre of gravity (S) of the respective solar panel (6).

## Revendications

1. Agencement de montage pour supporter une charge suspendue (2), dans lequel
- l'agencement de montage (4) comprend un premier et un deuxième élément de montage (14, 16),
- l'un des éléments de montage comprend au moins un aimant (18), et
- l'autre élément de montage comprend un métal vers lequel est attiré magnétiquement le premier élément de montage,
- l'un au moins des éléments de montage (14 ; 16) comprend dans sa surface de montage (20) au moins une buse de sortie de gaz (22) qui est sollicitée par un gaz sous pression, de sorte qu'un courant de gaz sortant hors de la buse de sortie de gaz (22) forme un coussin de gaz entre les éléments de montage (14, 16) qui s'attirent mutuellement en raison de la force magnétique, coussin qui maintient en écartement les éléments de montage (14, 16) l'un de l'autre, et
- un premier élément (14) des éléments de montage (14, 16) comprend une pluralité de têtes de montage (32)
**caractérisé en ce que**
- les têtes de montage (32) sont montées avec faculté de pivotement individuellement sur une structure porteuse (30) susceptible d'être reliée en action à la charge à supporter (2), pour que les têtes de montage individuelles (32) s'appuient chacune de façon optimale au deuxième élément (16) des éléments de montage (14, 16),
- les buses de sortie de gaz (22) sont prévues dans le premier élément de montage (14), chaque tête de montage (32) présentant au moins une buse de sortie de gaz (22) pour générer le coussin de gaz,
- chaque tête de montage (32) du premier élément de montage (14) est pourvue de l'un au moins des aimants (18), et
- le deuxième élément de montage (16) comprend le métal et est réalisé sensiblement plan,
- le deuxième élément de montage (16) est formé par un panneau métallique stationnaire,
- les têtes de montage (32) du premier élément de montage (14) sont agencées en une rangée,
- il est prévu au moins deux têtes de montage (32) qui sont articulées chacune avec faculté de déplacement latéral à une extrémité d'une poutre de support (38, 38', 38", 38"') en forme de fléau de balance, et
- la poutre de support (38, 38', 38", 38''') est montée avec faculté de pivotement soit directement soit indirectement à la manière d'un fléau sur une structure de suspension (24, 26) pour la charge à supporter (2).

2. Agencement de montage selon la revendication 1, **caractérisé en ce que**
- la structure porteuse (30) comprend dans un premier plan (E1) un nombre pair de premières poutres de support (38, 38', 38", 38"') en forme de fléau, aux extrémités respectives desquelles sont montées, avec faculté de pivotement, deux têtes de montage (32) voisines l'une de l'autre,
- la structure porteuse (30) comprend dans un deuxième plan (E2) un certain nombre de deuxièmes poutres de support (40, 40') en forme de fléau, aux extrémités respectives desquelles sont montées, avec faculté de pivotement à la manière d'un fléau, deux premières poutres de support (38, 38', 38", 38"') voisines l'une de l'autre, et
- la structure porteuse (30) comprend de préférence dans un ou dans plusieurs autres plans (E3) des poutres de support (42, 42') en forme de fléau, aux extrémités respectives desquelles sont montées, avec faculté de pivotement à la manière d'un fléau, deux poutres de support (40, 40') voisines l'une de l'autre du plan (E2) situé au-dessus, et
- le plan (E4) le plus bas comprend une dernière poutre de support unique (44) qui est montée avec faculté de pivotement à la manière d'un fléau sur la structure de suspension (24, 26) pour la charge à supporter (2).

3. Agencement de montage selon l'une des revendications précédentes, **caractérisé en ce qu'**il est prévu des aimants permanents à titre d'aimants (18).

4. Agencement de montage selon l'une des revendications précédentes, **caractérisé en ce que** l'un au moins des aimants (18) est formé par un électro-aimant.

5. Agencement de montage selon la revendication 4, **caractérisé en ce** la force d'attraction de l'électro-aimant et/ou la force de repoussement du coussin de gaz sont réglables.

6. Agencement de montage selon l'une des revendications précédentes, **caractérisé en ce que**
- la tête de montage (32) comprend un boîtier dans lequel est intégré ledit au moins un aimant (18),
- le boîtier forme une surface de montage (34) de la tête de montage (32), au moins une structure de sortie de gaz (47) étant prévue dans le boîtier dans la surface de montage (34) autour de l'aimant (18), structure qui présente au moins une buse de sortie de gaz (22).

7. Agencement de montage selon l'une des revendications précédentes, **caractérisé en ce** la buse de sortie de gaz (22) dans la surface de montage (34) est formée par des micro-trous percés au moyen d'un jet riche en énergie, qui sont réalisés en forme conique, leur section transversale la plus étroite étant située au niveau de l'embouchure dans la surface de montage (34).

8. Agencement de montage selon l'une ou l'autre des revendications 6 et 7, **caractérisé en ce que** la structure de sortie de gaz (47) comprend une pluralité de buses de sortie de gaz (22) agencées autour de l'aimant (18).

9. Agencement de montage selon l'une ou l'autre des revendications 6 et 7, **caractérisé en ce que** la buse de sortie de gaz (22) est en liaison fluidique avec une gorge ménagée dans le boîtier autour de l'aimant.

10. Agencement de montage selon l'une des revendications 6 à 9, **caractérisé en ce que**
- le boîtier (48) est réalisé sensiblement à symétrie axiale, de préférence cylindrique, et la surface de montage (34) s'étend de façon orthogonale, de préférence orthogonale sur tout le tour par rapport à l'axe de symétrie (X) de la tête de montage (32),
- l'aimant est agencé coaxialement à l'axe de symétrie (X) de la tête de montage (32), les lignes de champ intérieures de l'aimant (18) s'étendant sensiblement parallèlement à l'axe de symétrie (X), et
- les buses de sortie de gaz (22) sont agencées en forme de cercle sur an moins un anneau (46) autour de l'aimant (18), qui est également coaxial à l'axe de symétrie (X).

11. Agencement de montage selon l'une des revendications 6 à 9, **caractérisé en ce que**
- la tête de montage est réalisée avec un contour de base rectangulaire ou trapézoïdal, et
- l'aimant est réalisé avec un contour de base rectangulaire ou trapézoïdal.

12. Utilisation de l'agencement de montage (4) selon l'une des revendications 1 à 11 pour la suspension avec compensation de la pesanteur d'un agencement de panneaux solaires repliables (2) pour un satellite dans un appareil de test pour un essai simulant l'apesanteur de l'opération de déploiement dans un champ de gravitation, au moins un agencement de montage (4) étant prévu pour suspendre l'agencement de panneaux solaires (2) avec libre faculté de déplacement horizontal.

13. Utilisation selon la revendication 12, **caractérisée en ce qu'**il est prévu plusieurs agencements de montage (4) dont un agencement de montage respectif (4) porte un panneau solaire (6) de l'agencement de panneaux solaires (2), constitué par plusieurs panneaux solaires (6), en suspension et avec libre faculté de déplacement horizontal et avec libre faculté de rotation autour de l'axe vertical (X) passant par le centre de gravité (S) du panneau solaire respectif (6).
